# EUROPÄISCHE PATENTSCHRIFT

(11) **EP 4 585 541 B1**
(45) Veröffentlichungstag und Bekanntmachung des Hinweises auf die Patenterteilung: **13.05.2026**
(21) Anmeldenummer: 24215655.2
(22) Anmeldetag: 27.11.2024
(51) Int. Cl.: B65G 47/14

(54) **VIBRATIONSWENDELFÖRDERER**
VIBRATORY SPIRAL CONVEYOR
CONVOYEUR À SPIRALE VIBRATOIRE

(30) Priorität: 11.01.2024 DE 202024100114 U
(43) Veröffentlichungstag der Anmeldung: 16.07.2025
(73) Patentinhaber: Ohrmann GmbH, 59519 Möhnesee (DE)
(72) Erfinder: PINCK, Uwe, 59519 Möhnesee (DE)
(74) Vertreter: Prinz & Partner mbB

(56) Entgegenhaltungen:
- CN-A- 110 697 384
- DE-B- 1 209 495
- ES-A1- 2 299 402
- US-A- 3 114 448
- US-A- 3 655 028

## Beschreibung

Die Erfindung betrifft einen Vibrationswendelförderer mit einem in Vibration versetzbaren Sortiertopf, der auf seiner Innenseite einen sich schneckenförmig zum oberen Rand des Sortiertopfs wendelnden Absatz hat.

Vibrationswendelförderer gehören zu den Schwingförderern und dienen der vertikalen Förderung von staub- bis grobkörnigen Schüttgütern sowie stückigen Gütern. Zusätzlich können Vibrationswendelförderer dafür verwendet werden, als Schüttgut vorliegende Gegenstände, wie beispielsweise Dichtungen, Schrauben oder elektronische Bauteile zu sortieren und lagerichtig für eine automatische Weiterverarbeitung bereitzustellen.

Dafür umfassen Vibrationswendelförderer einen Aktuator, welcher Schwingungen erzeugt. Durch die Schwingungen, die von dem Aktuator auf den Sortiertopf übertragen werden, kommt es zu sogenannten Mikrowürfen, durch welche das Schüttgut transportiert wird.

Damit das Schüttgut zusätzlich sortiert werden kann, umfasst der Vibrationswendelförderer üblicherweise Sortierelemente, welche auch Schikanen genannt werden, die das Schüttgut nach Größe, das heißt Länge, Breite und Höhe sowie nach Lage sortieren oder ausrichten. Um den Vibrationswendelförderer auch für andere Gegenstände nutzen zu können, sind die Sortierelemente austauschbar, sodass sie auf die Größen anderer Gegenstände abgestimmt werden können. Diese Sortierelemente oder Schikanen werden durch Schrauben an dem Sortiertopf sicher befestigt und nach Bedarf schnell ausgetauscht.

Alternativ werden die Sortierelemente oder Schikanen gemäß der konventionellen Bauweise per Handarbeit an die Stahl- oder Aluminium-Sortiertöpfe angeschweißt und geformt.

US 3 655 028 A beschreibt einen Vibrationswendelförderer nach dem Oberbegriff des vorliegenden Anspruchs 1.

Es ist eine Aufgabe der Erfindung, einen Vibrationswendelförderer bereitzustellen, bei dem Sortierelemente noch schneller und einfach getauscht werden können.

Diese Aufgabe wird erfindungsgemäß durch einen Vibrationswendelförderer, der einen in Vibration versetzbaren Sortiertopf, der auf seiner Innenseite einen sich schneckenförmig zum oberen Rand des Sortiertopfs wendelnden Absatz hat, umfasst. Außerdem weist der Vibrationswendelförderer zumindest ein Anbauelement am Sortiertopf auf, wobei der Sortiertopf und das Anbauelement jeweils wenigstens einen Magneten aufweisen. In dem am Sortiertopf befestigten Zustand liegen die Magneten einander mit gegensätzlicher Polung gegenüber. Über die Magneten ist das Anbauelement somit lösbar am Sortiertopf befestigt. In anderen Worten, das Anbauelement wird über gegensätzlich gepolte Magneten reversibel an dem Sortiertopf befestigt. Somit kann das Anbauelement werkzeuglos befestigt beziehungsweise gelöst werden, wodurch ein schnellerer Wechsel der verschiedenen Anbauelemente ermöglicht wird. Zum Lösen des Anbauelements muss lediglich ein leichter Druck entgegen der wirkenden Magnetkraft aufgebracht werden, bevor das Anbauelement von dem Sortiertopf entfernt werden kann. Außerdem helfen die Magnete beim Zentrieren der Anbauelemente oder sind, optional, dafür sogar verantwortlich, sodass sich die Anbauelemente beim Einfügen durch die Magnetkraft selbst zentrieren, wodurch die erforderte Genauigkeit der Anordnung der Anbauelemente gewährleistet werden kann.

Bei dem Anbauelement handelt es sich vorzugsweise um ein Sortierelement, welches dafür sorgt, dass das entsprechende Schüttgut exakt vereinzelt wird und der Vibrationswendelförderer zuverlässig im Dauerbetrieb laufen kann. Bei Verwendung eines anderen Schüttguts, z.B. Dichtringen mit anderen Dimensionen als zuvor vereinzelte Dichtringe, ist es notwendig, die Anbauelemente entsprechend zu wechseln.

Bei dem Schüttgut handelt es sich beispielsweise um Dichtungen, Schrauben, elektronische Bauteile oder dergleichen. Die Teile werden vereinzelt, genau ausgerichtet, lagerichtig orientiert, um danach einzeln abgenommen und zu dem nächsten Schritt in dem Arbeitsprozess geführt zu werden.

Bei dem Magneten kann es sich um einen Dauermagneten aus einer metallischen Legierung basierend auf Eisen, Nickel oder Aluminium handeln.

Alternativ kann der Magnet am Sortiertopf auch ein Elektromagnet sein, wodurch das Austauschen des Anbauelements erleichtert wird, da nach Abschalten des Elektromagneten keine magnetischen Kräfte zwischen dem Anbauelement und dem Sortiertopf wirken.

Vorzugsweise sind die Magneten des Anbauelements und des Sortiertopfs Magnetteller. Durch die Verwendung von Magnettellern ist eine punktuelle Befestigung und Ausrichtung des Anbauelements an dem Sortiertopf gegeben. Des Weiteren handelt es sich bei Magnettellern üblicherweise um axial klein bauende, langlebige und robuste Bauteile, welche in verschiedenen, aufeinander abgestimmten Größen zur Verfügung stehen. Dementsprechend kann die Größe des Magnettellers an das zu befestigende Anbauelement angepasst werden.

Vorzugsweise weist jedes Anbauelement jedoch die gleiche Größe an Magneten auf.

Die Magnetteller können mit dem Basiskörper oder dem Sortiertopf verschraubt sein. Dafür können die Magnetteller eine mittige Befestigungsöffnung haben. Alternativ können die Magnetteller auch an dem Basiskörper oder dem Sortiertopf angeklebt oder mit diesem verschweißt sein. Wichtig ist dabei lediglich, dass sich die Magnetteller nicht von dem Anbauelement beziehungsweise dem Sortiertopf lösen, wenn das Anbauelement ausgetauscht wird.

Gemäß einer bevorzugten Ausführungsform ist das zumindest eine Anbauelement durch wenigstens zwei Paare von gegenüberliegenden Magneten am Sortiertopf befestigt, d.h. das Anbauelement weist wenigstens genau zwei Magneten auf und der Sortiertopf zwei zugeordnete Magneten. Dadurch können eine sicherere Befestigung und eine genaue Ausrichtung gewährleistet werden, wobei für große beziehungsweise lange Anbauelemente auch mehr Magnetpaare vorgesehen werden können als für kurze Anbauelemente.

Wenn ein Anbauelement über mehrere Magneten an dem Sortiertopf befestigt ist, sind die Magneten vorzugsweise in regelmäßigen Abständen zueinander angeordnet, wobei sich insbesondere an den jeweiligen Enden des Anbauelements Magnete befinden.

Vorzugsweise ist am Sortiertopf eine Ausnehmung zur Aufnahme des Anbauelements vorgesehen. Dadurch wird die Befestigung des Anbauelements an dem Sortiertopf vereinfacht, da von Beginn an ersichtlich ist, an welche Stelle das Anbauelement gehört. Zusätzlich kann somit die richtige Ausrichtung des Anbauelements gewährleistet werden, da die Ausnehmung eine Formschlussverbindung mit dem Anbauelement bilden kann. Die Ausnehmung sichert das Anbauelement auch in verschiedenen Richtungen formschlüssig.

Das Anbauelement kann einen Abschnitt einer Förderbahn für zu vereinzelnde Gegenstände definieren. Somit kann die Förderbahn abschnittsweise an die zu sortierenden Gegenstände angepasst werden.

Gemäß einer bevorzugten Ausführungsform bildet ein erstes Anbauelement dabei einen letzten Abschnitt eines die Förderbahn bildenden Absatzes vor einem Fallschacht an der höchsten Stelle der Förderbahn. Dadurch kann abschließend noch einmal sichergestellt werden, dass nicht mehrere Gegenstände nebeneinander zum Fallschacht gelangen und sich an diesem verkeilen. Es gelangt somit immer nur ein genau ausgerichteter Gegenstand nach dem anderen in den Fallschacht.

Zusätzlich kann das erste Anbauelement auch den Fallschacht aufweisen, denn auch dessen Abmessungen müssen genau den zu vereinzelnden Gegenständen entsprechen, damit diese einerseits leicht fallen und andererseits genau ausgerichtet aufgereiht bleiben.

Insbesondere weist dabei der Sortiertopf eine Umfangswand mit einem oberen Rand auf, die einen vom oberen Rand beginnenden Ausschnitt hat, der durch einen plattenförmigen Fortsatz am ersten Anbauelement geschlossen ist. Von diesem Fortsatz geht ein bogenförmiger Abschnitt aus, der den letzten Abschnitt des Absatzes bildet.

Dabei kann an dem Übergang von dem Fortsatz zu dem bogenförmigen Abschnitt ein Schlitz vorgesehen sein, durch den die zu vereinzelnden Gegenständen in den Fallschacht gelangen. Dieser Schlitz bildet die Ausgangsstelle des Fallschachtes. Der bogenförmige Abschnitt, welcher den letzten Abschnitt des Absatzes bildet, dient dazu, die Gegenstände, welche nicht in den Fallschacht befördert werden sollen, zum Boden des Sortiertopfs zu "werfen".

Gemäß einer Ausführungsform hat der Sortiertopf auf seiner Innenseite am Ende eines an ihm ausgeformten Absatzes eine nach unten springende Vertiefung mit einem verbreiterten Anlageabsatz, an dem Magnete angebracht sind. Dabei weist der diese Vertiefung ausfüllende bogenförmige Abschnitt des ersten Anbauelements an seiner Unterseite Gegenmagnete auf. Somit kann das Anbauelement einfach und sicher an dem Sortiertopf befestigt werden. Die genaue Anzahl der Magnete sowie der Abstand zwischen den Magneten hängt dabei von der Größe des Anbauelements ab.

Ein Anbauelement kann auch einen Höhenabweiser vor einem Fallschacht bilden sowie einen seitlich nach außen weisenden, oberen Absatz haben, an dessen Unterseite zumindest ein Magnet vorgesehen ist. Dabei kann der obere Absatz auf einem oberen Rand des Sortiertopfs aufliegen, wobei der Sortiertopf in diesem Bereich einen Gegenmagnet aufweist. Durch den Höhenabweiser des Anbauelements können auf anderen Gegenständen aufliegende Gegenstände vom Absatz entfernt werden. Durch den nach außen weisenden oberen Absatz des Anbauelements ist eine einfache und sichere Befestigung und Ausrichtung des Anbauelements am Sortiertopf möglich.

Vorzugsweise sitzt der Höhenabweiser in dem Bereich des Absatzes, der durch das erste Anbauelement definiert ist. Somit kann dieser Abschnitt des Absatzes für die verschiedensten Gegenstände genutzt werden und erst im letzten Abschnitt des Absatzes wird im Bereich, in dem der Absatz durch das erste Anbauelement schmäler wird, auch der individualisierte Höhenabweiser eingesetzt. Somit wird der "Strom" an Gegenständen auf kurzer Strecke in der Höhe und der Breite limitiert, bevor er den Schlitz zum Fallschacht erreicht.

Gemäß einer Ausführungsform ist ein weiteres Anbauelement eine Fallschachteinheit, die außenseitig des Sortiertopfs vorgesehen ist. Dabei sind Magnete und Gegenmagnete an der Außenseite des Sortiertopfs sowie einer dieser zugewandten Innenseite der Fallschachteinheit angebracht. Dementsprechend ist auch eine seitliche Befestigung der Anbauelemente möglich. Um ein Anbauelement seitlich an dem Sortiertopf zu befestigen, wird das Anbauelement seitlich zu dem Sortiertopf hingeführt. Dabei helfen die Magnete zusätzlich, das Anbauelement richtig zu zentrieren. Um das Anbauelement zu entfernen, muss lediglich ein leichter seitlicher Druck auf das Anbauelement angebracht werden, sodass sich die Magnetverbindung zwischen dem Anbauelement und dem Sortiertopf löst.

Vorzugsweise ist die Fallschachteinheit zusätzlich mit zumindest einem mechanischen, zerstörungsfrei lösbaren Befestigungsmittel, insbesondere Befestigungsschrauben, gesichert.

Außerdem kann ein Deckel des Fallschachts vorgesehen sein, der über Magnete angebracht und befestigt ist. Durch die zusätzliche Arretierung der Fallschachteinheit mit einem weiteren Befestigungsmittel neben der Magnetverbindung kann sichergestellt werden, dass der Fallschacht weiterhin sicher an dem Sortiertopf befestigt ist, wenn der Deckel gelöst wird.

Gemäß einer bevorzugten Ausführungsform ist der Vibrationswendelförderer ein modularer Vibrationswendelförderer mit mehreren verschiedenen, an derselben Stelle des Sortiertopfs anbringbaren Anbauelementen, die für zu sortierende Gegenstände anderer Abmessungen ausgelegt sind. Somit kann der Vibrationswendelförderer für verschiedene Anwendungen und Sortiervorgänge verwendet werden, wodurch die Kosten reduziert werden, da lediglich nach Bedarf die passenden Anbauelemente erworben werden müssen.

Vorzugsweise sind die Anbauelemente aus einem Kunststoff gebildet, insbesondere aus einer Mischung aus Nylon oder Polycaprolactam (PA6) und zerkleinerten Carbonfasern besteht. Dementsprechend handelt es sich bei den Anbauelementen um leichte Teile, die kostengünstig in der Herstellung sind.

Selbstverständlich können alternativ auch andere Werkstoffe verwendet werden, vorzugsweise in Abhängigkeit von dem für den Vibrationswendelförderer verwendeten Grundwerkstoff. Somit können uneinheitliche Materialpaarungen zwischen dem Grundkörper und den Anbauelementen vermieden werden.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 eine schematische Ansicht eines erfindungsgemäßen Vibrationswendelförderers;
- Figur 2A eine teilweise Explosionsansicht des Vibrationswendelförderers mit einem ersten Anbauelement und Figur 2B eine schematische Darstellung des Vibrationswendelförderers mit dem ersten Anbauelement;
- Figur 3A eine teilweise Explosionsansicht des Vibrationswendelförderers mit einem zweiten Anbauelement und Figur 3B eine schematische Darstellung des Vibrationswendelförderers mit dem zweiten Anbauelement; und
- Figur 4A eine teilweise Explosionsansicht des Vibrationswendelförderers mit einem dritten Anbauelement und Figur 4B eine schematische Darstellung des Vibrationswendelförderers mit dem dritten Anbauelement.

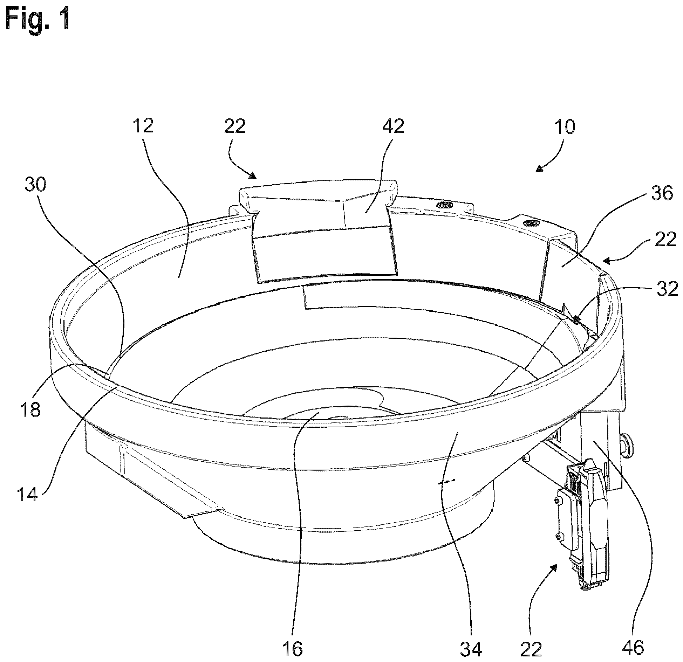

In Figur 1 ist ein Vibrationswendelförderer 10 dargestellt, der nach dem Mikrowurfprinzip arbeitet, das heißt ein Vibrationsvereinzelnder ist.

Dieser Vibrationswendelförderer 10 umfasst einen Sortiertopf 12, der sich nach oben zu seinem oberen Rand 14 trichterförmig aufweitet. Im Inneren des Topfes beginnt vom Boden 16 ausgehend ein Absatz 18, der sich schneckenförmig bis zum oberen Rand 14 mit gleichmäßiger Steigung emporwendet.

Die den Sortiertopf 12 bildende Seitenwand hat mehrere Ausnehmungen 20, die später noch näher erläutert werden und die Anbauelemente 22 aufnehmen.

Der in Figur 1 gezeigte Vibrationswendelförderer 10 weist dabei drei Ausnehmungen 20 auf, in die jeweils ein Anbauelement 22 eingefügt wird. Prinzipiell kann der Vibrationswendelförderer 10 auch lediglich ein Anbauelement 22, zwei Anbauelemente 22 oder mehr als drei Anbauelemente 22 aufweisen.

Das zumindest eine Anbauelement 22 ist über wenigstens einen Magneten 24 lösbar an dem Sortiertopf 12 befestigt.

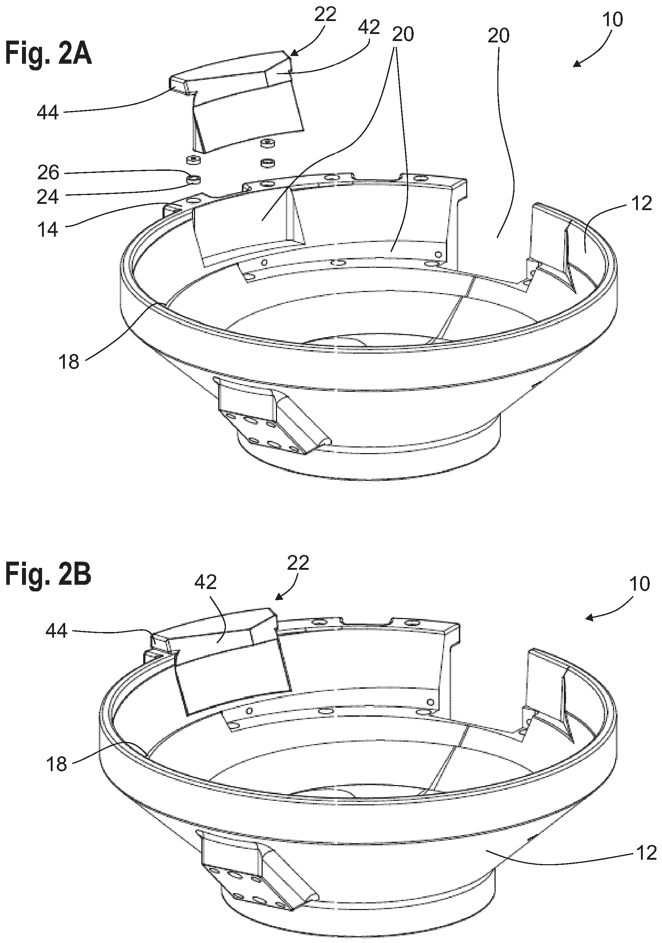

Wie beispielsweise in Figur 2A zu sehen ist, ist das Anbauelement 22 über zwei Magnete 24 an dem Sortiertopf 12 befestigt. Dabei weist der Sortiertopf 12 ebenso zwei Magnete 24 auf, welche als Gegenmagnete fungieren. Das heißt, die Magnete 24 des Anbauelements 22 und die Magnete 24 des Sortiertopfs 12 weisen eine gegensätzliche Polung auf und liegen einander gegenüber, sodass das Anbauelement 22 lösbar am Sortiertopf 12 befestigt werden kann. So können die Magnete 24 des Anbauelements 22 beispielsweise eine Nordausrichtung haben, während die Magnete 24 des Sortiertopfs 12 eine Südausrichtung aufweisen.

Bei den Magneten 24 kann es sich sowohl um Permanentmagnete als auch um Elektromagnete handeln. Die Permanentmagnete, die auch Dauermagnete genannt werden, bestehen beispielsweise aus einer metallischen Legierung, welche auf Eisen, Nickel oder Aluminium basiert. Im Gegensatz zu der Verwendung von Permanentmagneten muss bei der Verwendung von Elektromagneten die Magnetkraft zwischen den Magneten 24 des Anbauelements 22 und des Sortiertopfs 12 bei der Demontage nicht überwunden werden, da die Elektromagnete zum Entfernen des Anbauelements 22 einfach ausgeschaltet werden können.

Bei den in den Figuren gezeigten Ausführungsformen handelt es sich bei den Magneten 24 um Permanentmagneten. Insbesondere sind hier der Magnet 24 als Magnetteller ausgeführt, welche eine mittige Befestigungsöffnung 26 aufweist.

Die Befestigungsöffnung 26 dient, wie der Name schon sagt, zum Befestigen des Magneten 24. Dabei kann insbesondere eine Schraube durch die Befestigungsöffnung 26 geführt werden, sodass die Magnete 24 mit dem Anbauelement 22 oder dem Sortiertopf 12 verschraubt werden können. Alternativ ist es selbstverständlich auch möglich, die Magnete 24 mit dem Anbauelement 22 beziehungsweise dem Sortiertopf 12 zu verkleben oder anderweitig zu befestigen.

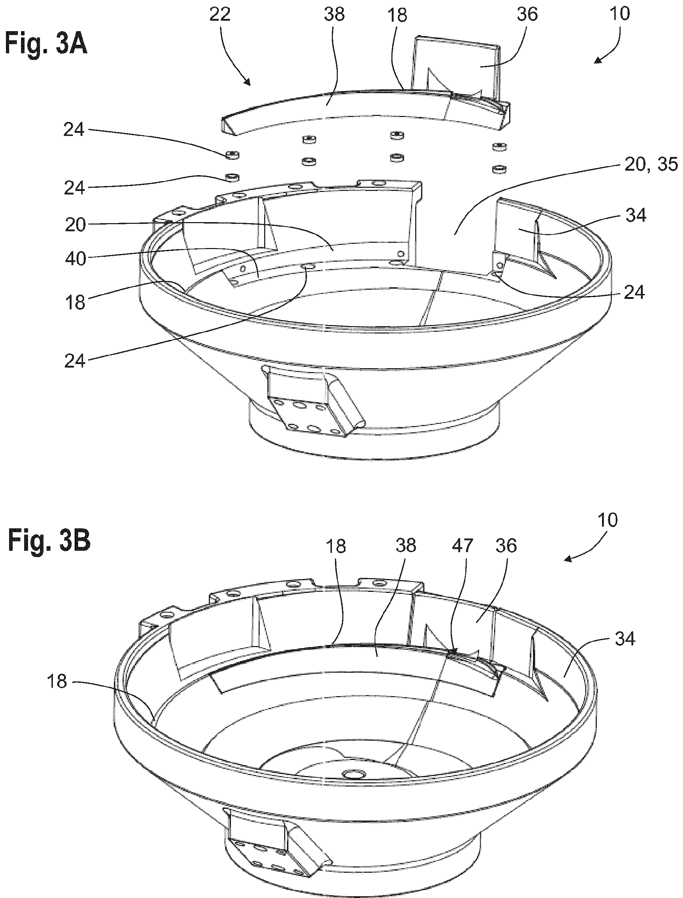

Wie bereits erwähnt, ist in Figur 2A zu sehen, dass das dort gezeigte Anbauelement 22 durch zwei Paare von gegenüberliegenden Magneten 24 am Sortiertopf 12 befestigt ist. Dabei sind die Magnete 24 jeweils am äußeren Rand des Anbauelements 22 befestigt. Bei größeren beziehungsweise längeren Anbauelementen 22, wie beispielsweise in den Figuren 3A und 3B, können auch mehr als zwei Paare von gegenüberliegenden Magneten 24 zur Befestigung des Anbauelements 22 am Sortiertopf 12 verwendet werden. In Figur 3A sind zur Befestigung des Anbauelements 22 vier Magnete 24 mit ihren jeweiligen Gegenmagneten vorgesehen.

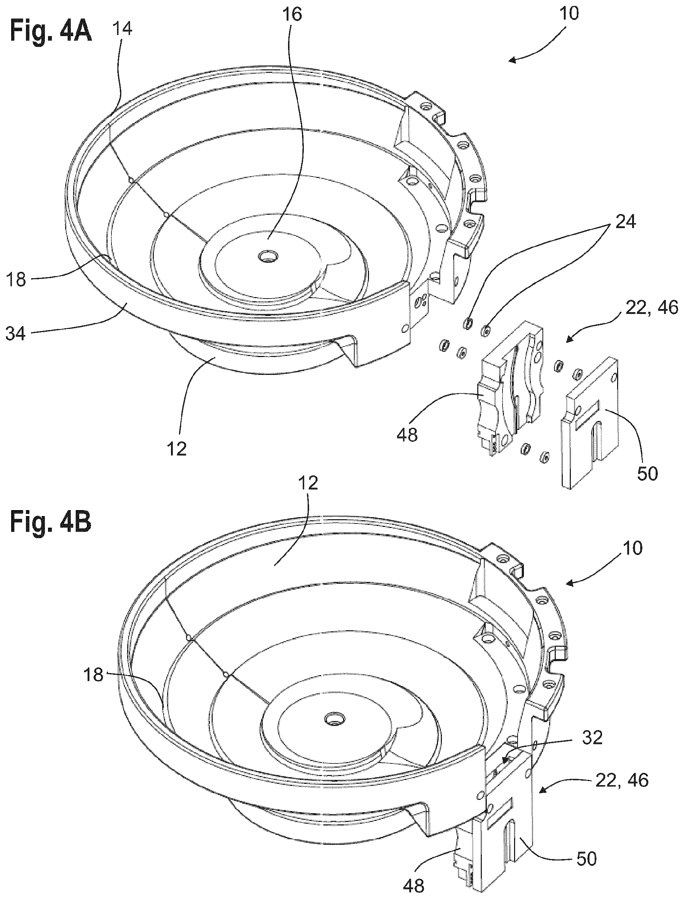

Durch die Befestigung der Anbauelemente 22 mit Magneten 24 an dem Sortiertopf 12 werden keinerlei Werkzeuge benötigt, um ein Anbauelement 22 von dem Sortiertopf 12 zu trennen. Es muss lediglich eine Kraft auf das Anbauelement 22 ausgeübt werden, welche entgegen der Magnetkraft gerichtet ist und diese überwindet. In den Figuren 2A, 2B, 3A und 3B ist die Kraft zum Lösen der Anbauelemente 22 nach oben gerichtet, während in den Figuren 4A und 4B die aufgewandte Kraft seitlich von dem Sortiertopf 12 weggerichtet ist.

Auch zum Befestigen der Anbauelemente 22 am Sortiertopf 12 werden aufgrund der Magnete 24 keine Werkzeuge benötigt. Die Anbauelemente 22 müssen lediglich mit einer senkrecht zum oberen Rand 14 beziehungsweise senkrecht zur Seitenwand des Sortiertopfs 12 zu dem Vibrationswendelförderer 10 hingeführt werden, bis die Magnete 24 nahe genug beieinander sind und die Magnetkraft wirken kann.

Wenn Permanentmagnete verwendet werden, so helfen diese zusätzlich beim Zentrieren der Anbauelemente 22, wenn diese in die Ausnehmung 20 des Sortiertopfs 12 eingeführt werden, oder sie sind sogar allein für die Zentrierung verantwortlich. Elektromagnete würden dagegen zum Befestigen und Lösen des Anbauelements 22 ausgeschaltet werden, sodass keine Magnetkraft überwunden werden muss, um das Anbauelement 22 vom Sortiertopf 12 zu lösen.

Vorzugsweise sind die Anbauelemente 22 aus einem Kunststoff gebildet, insbesondere aus einer Mischung aus Nylon oder Polycaprolactam (PA6) und zerkleinerten Carbonfasern. Alternativ kann auch ein anderer Kunststoff verwendet werden. Durch die Fertigung der Anbauelemente 22 aus Kunststoff können die Produktionskosten gesenkt werden, wodurch die Anbauelemente 22 günstiger verkauft werden können.

Dadurch, dass die Anbauelemente 22 lösbar an dem Sortiertopf 12 befestigt sind, ist der Vibrationswendelförderer 10 als ein modularer Vibrationswendelförderer 10 ausgebildet. Das heißt, der Vibrationswendelförderer 10 umfasst mehrere verschiedene, an derselben Stelle des Sortiertopfs 12 anbringbare Anbauelemente 22, die für zu sortierende Gegenstände andere Abmessungen aufweisen. Somit muss nicht für jeden Sortiervorgang ein eigener Vibrationswendelförderer 10 angeschafft werden, sondern es können die Anbauelemente 22 einfach ausgetauscht werden. Dabei kann es auch möglich sein, dass nicht nur Gegenstände mit verschiedenen Abmessungen, sondern auch verschiedene Gegenstände durch die austauschbaren Anbauelemente 22 mit ein und demselben Vibrationswendelförderer 10 sortiert und transportiert werden können. Da die Anbauelemente 22 für das Sortieren der Gegenstände zuständig sind, werden diese auch Sortierelemente genannt.

Wie in den Figuren 3A und 3B zu sehen ist, kann das Anbauelement 22 einen Abschnitt des Absatzes 18 definieren, welcher eine Förderbahn 30 bildet. Das heißt, das Anbauelement 22 komplementiert die Innenseite des Sortiertopfs 12, sodass sich der Abschnitt des Absatzes 18 am Anbauelement 22 absatzlos in den Absatz 18 am Sortiertopf 12 anschließt. Dementsprechend hat der Abschnitt des Absatzes 18, welcher an dem Anbauelement 22 ausgebildet ist, dieselbe Steigung wie der Abschnitt des Absatzes 18 am Sortiertopf 12.

Somit entsteht eine absatzlose Förderbahn 30.

Neben der Ausnehmung 20 in einer Umfangswand 34 des Sortiertopfs 12 ist zusätzlich ein vom oberen Rand 14 beginnender Ausschnitt 35 vorgesehen, welcher ebenfalls eine Ausnehmung 20 bildet und welche durch einen plattenförmigen Fortsatz 36 des ersten Anbauelements 22 geschlossen wird. Der Fortsatz 36 schießt somit den Sortiertopf 12 seitlich.

Von dem plattenförmigen Fortsatz 36 geht ein bogenförmiger Abschnitt 38 aus, welcher den gerade erwähnten letzten und damit vertikal am höchsten gelegenen Abschnitt des Absatzes 18 vor einem Fallschacht 32 an der höchsten Stelle der Förderbahn 30 bildet.

An diesem bogenförmigen Abschnitt 38 werden Gegenstände, welche nicht genau ausgerichtet sind und daher nicht durch den Fallschacht 32 passen, zurück zum Boden des Sortiertopfs 12 befördert. Somit kann dieser Gegenstand später wieder nach oben gefördert und sortiert werden.

Der am Anbauelement 22 ausgebildete Abschnitt des Absatzes 18 wird in radialer Richtung schmäler und ist auf die Breite der zu vereinzelnden Gegenstände abgestimmt, so dass am Ende des Absatzes nur ein Gegenstand am Absatz aufliegen kann und zum Fallschacht gelangen kann.

Das Anbauelement 22 kann zusätzlich auch den Fallschacht 32 aufweisen, sodass der Absatz 18 in dem Anbauelement 22 mit dem Fallschacht 32 endet.

Alternativ hierzu endet das Anbauelement 22 angrenzend zu einer an sie anschließenden Fallschachteinheit 46, die in den Figuren 4A und 4B gezeigt ist. In diesem Fall ist am Anbauelement 22 am Ende des Absatzes 18 ein Schlitz 47 als Eingang zum Fallschacht 32 vorgesehen (siehe Figur 3B). Dadurch kann durch Wechseln des Anbauelements 22 auch die Geometrie des Schlitzes 47 an die Geometrie der zu vereinzelnden Gegenstände angepasst werden.

Das in den Figuren 3A und 3B gezeigte Anbauelement 22 kann schnell, positionsgenau und einfach an dem Sortiertopf 12 befestigt werden. Dazu weist der Sortiertopf 12 auf seiner Innenseite am Ende des am Sortiertopf ausgeformten Absatzes 18 eine Ausnehmung 20 in Form einer nach unten springenden Vertiefung mit einem verbreiterten Anlageabsatz 40 auf, in der der bogenförmige Abschnitt 38 aufgenommen wird.

An dem Anlageabsatz 40 sind die Magnete 24 angebracht. In dem in den Figuren 3A und 3B gezeigten Ausführungsbeispiel sind dabei insbesondere vier Magnete 24 in dem Anlageabsatz 40 vorgesehen.

Das Anbauelement 22 weist dementsprechend auf einer Unterseite des bogenförmigen Abschnitts 38 ebenfalls Magnete 24 auf, wobei es sich bei den Magneten 24 des Anbauelements 22 um Gegenmagnete handelt.

Durch die Ausnehmung 20 und den Anlageabsatz 40 ist es möglich, das Anbauelement 22 optimal zum Sortiertopf 12 auszurichten, da das Anbauelement 22 mit der Ausnehmung 20 und dem Anlageabsatz 40 einen Formschluss bildet. Zusätzlich helfen die Magnete 24 bei der Zentrierung des Anbauelements 22.

In den Figuren 2A und 2B ist ein weiteres Anbauelement 22 gezeigt, welches einen Höhenabweiser 42 vor dem Fallschacht 32 bildet. Ähnlich wie bei dem ersten Anbauelement 22 ist der Höhenabweiser 42 so ausgebildet, dass zu sortierende Gegenstände, welche die gewünschte Höhe oder Lagehöhe (z.B. bei aufeinanderstehenden Gegenständen) überschreiten, zurück zum Boden des Sortiertopfs 12 befördert werden. Dafür weist der Höhenabweiser 42 einen auf einer bestimmten Höhe gegenüber dem Absatz 18 leicht ins Innere des Sortiertopfs 12 vorstehenden Fortsatz auf.

Für die Befestigung dieses Anbauelements 22 sind Magneten 24 an dem oberen Rand 14 des Sortiertopfs 12 befestigt. Das Anbauelement 22 weist dementsprechend einen nach außen weisenden oberen Absatz 44 auf, an dessen Unterseite zumindest ein Magnet 24 vorgesehen ist. In dem in den Figuren 2A und 2B gezeigten Ausführungsbeispiel ist das Anbauelement 22 mit zwei Paaren von Magneten 24 befestigt.

Zusätzlich zu dem Höhenabweiser 42 kann das in den Figuren 2A und 2B gezeigte Anbauelement 22 ebenfalls einen Teil des Absatzes 18 definieren. Alternativ kann der Absatz 18 an dieser Stelle auch durch das in den Figuren 3A und 3B gezeigte Anbauelement 22 oder den Absatz 18 des Sortiertopfs 12 definiert werden.

In den Figuren 4A und 4B ist ein weiteres Anbauelement 22 gezeigt, welches eine Fallschachteinheit 46 bildet. Dementsprechend ist dieses Anbauelement 22 an der Außenseite des Sortiertopfs 12 vorgesehen, sodass Magnete 24 und die entsprechenden Gegenmagnete an der Außenseite des Sortiertopfs 12 und einer dieser zugewandten Innenseite der Fallschachteinheit 46 angebracht sind. In Figur 4A ist zu sehen, dass das hier gezeigte dritte Anbauelement 22 über zwei Paare von Magneten 24 außenseitig an dem Sortiertopf 12 befestigt ist.

Es ist außerdem zu sehen, dass die Fallschachteinheit 46 aus zwei Teilen besteht, wobei es sich bei dem ersten Teil um eine im Querschnitt U-förmige vertikal nach unten verlaufenden Fallschachtprofilhälfte 48 und bei dem zweiten Teil um einen die Fallschachtprofilhälfte 48 verschließenden Deckel 50 handelt. Dabei ist der Deckel 50 ebenfalls über Magnete 24 an der Fallschachtprofilhälfte 48 befestigt.

Alternativ kann der Deckel 50 auch anderweitig, beispielsweise durch Schrauben oder Kleber an der Fallschachtprofilhälfte 48 befestigt werden. Es ist außerdem möglich, dass die Fallschachteinheit 46 einstückig ausgeführt ist, und nicht wie in Figur 4A gezeigt aus zwei Teilen besteht.

Neben der in den Figuren gezeigten Ausführungsform des Vibrationswendelförderers 10 ist es selbstverständlich möglich, dass der Vibrationswendelförderer 10 lediglich ein Anbauelement 22, zwei Anbauelemente 22 oder auch mehr als die gezeigten Anbauelemente 22 umfasst. Dadurch ist der modulare Vibrationswendelförderer 10 für jegliche Anwendungsformen anpassbar.

## Patentansprüche

1. Vibrationswendelförderer (10), mit einem in Vibration versetzbaren Sortiertopf (12), der auf seiner Innenseite einen sich schneckenförmig zum oberen Rand (14) des Sortiertopfs (12) wendelnden Absatz (18) hat, mit zumindest einem Anbauelement (22) an den Sortiertopf (12), **dadurch gekennzeichnet, dass** der Sortiertopf (12) und das Anbauelement (22) jeweils wenigstens einen Magneten (24) aufweisen, die im am Sortiertopf (12) befestigten Zustand des Anbauelements (22) einander mit gegensätzlicher Polung gegenüberliegen und über die das Anbauelement (22) lösbar am Sortiertopf (12) befestigt ist.

2. Vibrationswendelförderer (10) nach Anspruch 1, **dadurch gekennzeichnet, dass** die Magnete (24) des Anbauelements (22) und des Sortiertopfs (12) Magnetteller sind.

3. Vibrationswendelförderer (10) nach einem der Ansprüche 1 oder 2, **dadurch gekennzeichnet, dass** die Magnetteller mit dem Anbauelement (22) oder dem Sortiertopf (12) verschraubt sind und eine mittige Befestigungsöffnung (26) haben.

4. Vibrationswendelförderer (10) nach einem der vorhergehenden Ansprüche, **dadurch gekennzeichnet, dass** das zumindest eine Anbauelement (22) durch wenigstens zwei Paare von gegenüberliegenden Magneten (24) am Sortiertopf (12) befestigt ist.

5. Vibrationswendelförderer (10) nach einem der vorhergehenden Ansprüche, **dadurch gekennzeichnet, dass** am Sortiertopf (12) eine Ausnehmung (20) zur Aufnahme des Anbauelements (22) vorgesehen ist.

6. Vibrationswendelförderer (10) nach einem der vorhergehenden Ansprüche, **dadurch gekennzeichnet, dass** ein Anbauelement (22) einen Abschnitt einer Förderbahn (30) für zu vereinzelnde Gegenstände definiert.

7. Vibrationswendelförderer (10) nach Anspruch 6, **dadurch gekennzeichnet, dass** ein erstes Anbauelement (22) einen letzten Abschnitt eines die Förderbahn (30) bildenden Absatzes (18) vor einem Fallschacht (32) an der höchsten Stelle der Förderbahn (30) definiert.

8. Vibrationswendelförderer (10) nach Anspruch 7, **dadurch gekennzeichnet, dass** der Sortiertopf (12) eine Umfangswand (34) mit einem oberen Rand (14) aufweist, die einen vom oberen Rand (14) beginnenden Ausschnitt (35) hat, der durch einen plattenförmigen Fortsatz (36) am ersten Anbauelement (22) geschlossen ist und von dem ein bogenförmiger Abschnitt (38) ausgeht, der den letzten Abschnitt des Absatzes (18) bildet.

9. Vibrationswendelförderer (10) nach Anspruch 7 oder 8, **dadurch gekennzeichnet, dass** der Sortiertopf (12) auf seiner Innenseite am Ende eines an ihm ausgeformten Absatzes (18) eine nach unten springende Vertiefung mit einem verbreiterten Anlageabsatz (40) hat, an dem Magnete (24) angebracht sind und wobei ein bogenförmiger Abschnitt (38) des ersten Anbauelements (22) an seiner Unterseite Gegenmagnete aufweist.

10. Vibrationswendelförderer (10) nach einem der vorhergehenden Ansprüche, **dadurch gekennzeichnet, dass** ein Anbauelement (22) einen Höhenabweiser (42) vor einem Fallschacht (32) bildet und einen seitlich nach außen weisenden oberen Absatz (44) hat, an dessen Unterseite zumindest ein Magnet (24) vorgesehen ist und der auf einem oberen Rand (14) des Sortiertopfes (12) aufliegt, wobei der Sortiertopf (12) einen Gegenmagnet aufweist.

11. Vibrationswendelförderer (10) nach einem der Ansprüche 7 bis 9 und zusätzlich nach Anspruch 10, **dadurch gekennzeichnet, dass** der Höhenabweiser (42) in dem Bereich des Absatzes (18) sitzt, der durch das erste Anbauelement (22) definiert ist.

12. Vibrationswendelförderer (10) nach einem der vorhergehenden Ansprüche, **dadurch gekennzeichnet, dass** ein Anbauelement (22) eine Fallschachteinheit (46) ist, die außenseitig des Sortiertopfes (12) vorgesehen ist, wobei Magnete (24) und Gegenmagnete an der Außenseite des Sortiertopfes (12) und einer dieser zugewandten Innenseite der Fallschachteinheit (46) angebracht sind.

13. Vibrationswendelförderer (10) nach einem der vorhergehenden Ansprüche, **dadurch gekennzeichnet, dass** der Vibrationswendelförderer (10) ein modularer Vibrationswendelförderer (10) ist mit mehreren verschiedenen, an derselben Stelle des Sortiertopfs (12) anbringbaren Anbauelementen (22), die für zu sortierende Gegenstände anderer Abmessungen ausgelegt sind.

14. Vibrationswendelförderer (10) nach einem der vorhergehenden Ansprüche, **dadurch gekennzeichnet, dass** die Anbauelemente (22) aus einem Kunststoff, insbesondere aus einer Mischung aus Nylon oder Polycaprolactam (PA6) und zerkleinerten Carbonfasern, gebildet sind.

## Claims

1. A vibratory bowl feeder (10), comprising a sorting bowl (12) which can be caused to vibrate and which has a shoulder (18) on its inside that spirally winds to the upper edge (14) of the sorting bowl (12), and comprising at least one add-on element (22) on the sorting bowl (12), **characterized in that** the sorting bowl (12) and the add-on element (22) each include at least one magnet (24) which, in the state in which the add-on element (22) is attached to the sorting bowl (12), face each other with opposite polarity and by means of which the add-on element (22) is detachably attached to the sorting bowl (12).

2. The vibratory bowl feeder (10) according to claim 1, **characterized in that** the magnets (24) of the add-on element (22) and of the sorting bowl (12) are magnetic disks.

3. The vibratory bowl feeder (10) according to either of claims 1 or 2, **characterized in that** the magnetic disks are screwed or bolted to the add-on element (22) or the sorting bowl (12) and have a central fastening opening (26).

4. The vibratory bowl feeder (10) according to any of the preceding claims, **characterized in that** the at least one add-on element (22) is attached to the sorting bowl (12) by at least two pairs of opposing magnets (24).

5. The vibratory bowl feeder (10) according to any of the preceding claims, **characterized in that** a recess (20) for receiving the add-on element (22) is provided on the sorting bowl (12).

6. The vibratory bowl feeder (10) according to any of the preceding claims, **characterized in that** an add-on element (22) defines a section of a feed track (30) for objects to be singulated.

7. The vibratory bowl feeder (10) according to claim 6, **characterized in that** a first add-on element (22) defines a final section of a shoulder (18) constituting the feed track (30) upstream of a drop chute (32) at the highest point of the feed track (30).

8. The vibratory bowl feeder (10) according to claim 7, **characterized in that** the sorting bowl (12) includes a circumferential wall (34) having an upper edge (14) and a cutout (35) that starts from the upper edge (14) and is closed by a plate-shaped extension (36) on the first add-on element (22) and from which an arcuate section (38) starts that forms the final section of the shoulder (18).

9. The vibratory bowl feeder (10) according to claim 7 or 8, **characterized in that** the sorting bowl (12) has, on its inside at the end of a shoulder (18) shaped on it, a depression recessed downwards and having a widened contact shoulder (40) to which magnets (24) are mounted, and wherein an arcuate section (38) of the first add-on element (22) has counter-magnets on its lower side.

10. The vibratory bowl feeder (10) according to any of the preceding claims, **characterized in that** an add-on element (22) constitutes a height deflector (42) upstream of a drop chute (32) and has an upper shoulder (44) that faces laterally outwards and on the lower side of which at least one magnet (24) is provided and which rests on an upper edge (14) of the sorting bowl (12), the sorting bowl (12) including a counter-magnet.

11. The vibratory bowl feeder (10) according to any of claims 7 to 9 and additionally according to claim 10, **characterized in that** the height deflector (42) is seated **in that** area of the shoulder (18) that is defined by the first add-on element (22).

12. The vibratory bowl feeder (10) according to any of the preceding claims, **characterized in that** one add-on element (22) is a drop chute unit (46) which is provided on the outside of the sorting bowl (12), with magnets (24) and counter-magnets being mounted to the outside of the sorting bowl (12) and to an inside, facing the outside of the sorting bowl, of the drop chute unit (46).

13. The vibratory bowl feeder (10) according to any of the preceding claims, **characterized in that** the vibratory bowl feeder (10) is a modular vibratory bowl feeder (10) having a plurality of different add-on elements (22) which are adapted to be mounted at the same location on the sorting bowl (12) and are designed for objects of different dimensions to be sorted.

14. The vibratory bowl feeder (10) according to any of the preceding claims, **characterized in that** the add-on elements (22) are formed from a plastic material, in particular from a mixture of nylon or polycaprolactam (PA6) and crushed carbon fibers.

## Revendications

1. Bol vibrant (10), comprenant un bol de tri (12) qui est apte à être amené à vibrer et qui présente, sur sa face intérieure, un épaulement (18) s'enroulant en spirale vers le bord supérieur (14) du bol de tri (12), et comprenant au moins un élément rapporté (22) sur le bol de tri (12), **caractérisé en ce que** le bol de tri (12) et l'élément rapporté (22) comportent chacun au moins un aimant (24) qui, à l'état dans lequel l'élément rapporté (22) est fixé au bol de tri (12), se font face avec une polarité opposée et au moyen desquels l'élément rapporté (22) est fixé de manière détachable au bol de tri (12).

2. Bol vibrant (10) selon la revendication 1, **caractérisé en ce que** les aimants (24) de l'élément rapporté (22) et du bol de tri (12) sont des disques magnétiques.

3. Bol vibrant (10) selon l'une des revendications 1 ou 2, **caractérisé en ce que** les disques magnétiques sont vissés avec l'élément rapporté (22) ou le bol de tri (12) et comportent un orifice de fixation central (26).

4. Bol vibrant (10) selon l'une des revendications précédentes, **caractérisé en ce que** ledit au moins un élément rapporté (22) est fixé au bol de tri (12) par au moins deux paires d'aimants (24) opposés.

5. Bol vibrant (10) selon l'une des revendications précédentes, **caractérisé en ce qu'**un évidement (20) pour la réception de l'élément rapporté (22) est prévu sur le bol de tri (12).

6. Bol vibrant (10) selon l'une des revendications précédentes, **caractérisé en ce qu'**un élément rapporté (22) définit une partie d'une voie de convoyage (30) pour des objets à séparer.

7. Bol vibrant (10) selon la revendication 6, **caractérisé en ce qu'**un premier élément rapporté (22) définit une dernière partie d'un épaulement (18) formant la voie de convoyage (30) en amont d'une goulotte de chute (32) au point le plus haut de la voie de convoyage (30).

8. Bol vibrant (10) selon la revendication 7, **caractérisé en ce que** le bol de tri (12) comporte une paroi périphérique (34) présentant un bord supérieur (14) et comportant une découpe (35) qui part du bord supérieur (14) et est fermée par un prolongement (36) en forme de plaque sur le premier élément rapporté (22) et d'où part une partie (38) en forme d'arc qui forme la dernière partie de l'épaulement (18).

9. Bol vibrant (10) selon la revendication 7 ou 8, **caractérisé en ce que** le bol de tri (12) présente, sur sa face intérieure, à l'extrémité d'un épaulement (18) formé sur celui-ci, un renfoncement en saillie vers le bas présentant un épaulement d'appui élargi (40) sur lequel sont fixés des aimants (24), une partie en forme d'arc (38) du premier élément rapporté (22) comportant des aimants antagonistes sur sa face inférieure.

10. Bol vibrant (10) selon l'une des revendications précédentes, **caractérisé en ce qu'**un élément rapporté (22) forme un déflecteur de hauteur (42) en amont d'une goulotte de chute (32) et présente un épaulement supérieur (44) tourné latéralement vers l'extérieur, sur la face inférieure duquel est prévu au moins un aimant (24) et qui repose sur un bord supérieur (14) du bol de tri (12), le bol de tri (12) comportant un aimant antagoniste.

11. Bol vibrant (10) selon l'une des revendications 7 à 9 et en outre selon la revendication 10, **caractérisé en ce que** le déflecteur de hauteur (42) est situé dans la zone de l'épaulement (18) définie par le premier élément rapporté (22).

12. Bol vibrant (10) selon l'une des revendications précédentes, **caractérisé en ce qu'**un élément rapporté (22) est une unité de goulotte de chute (46) prévue sur la face extérieure du bol de tri (12), des aimants (24) et des aimants antagonistes étant fixés sur la face extérieure du bol de tri (12) et sur une face intérieure de l'unité de de goulotte de chute (46) tournée vers celle-ci.

13. Bol vibrant (10) selon l'une des revendications précédentes, **caractérisé en ce que** le bol vibrant (10) est un bol vibrant modulaire (10) comportant une pluralité d'éléments rapportés (22) différents qui sont aptes à être montés au même emplacement du bol de tri (12) et qui sont conçus pour des objets à trier de dimensions différentes.

14. Bol vibrant (10) selon l'une des revendications précédentes, **caractérisé en ce que** les éléments rapportés (22) sont réalisés en une matière plastique, en particulier un mélange de nylon ou de polycaprolactame (PA6) et de fibres de carbone broyées.
